# FASCICULE DE BREVET EUROPEEN

(11) **EP 2 791 405 B1**
(45) Date de publication et mention de la délivrance du brevet: **15.04.2020**
(21) Numéro de dépôt: 12821287.5
(22) Date de dépôt: 10.12.2012
(51) Int. Cl.: D03D 25/00, B29C 70/24, F01D 5/28

(54) **STRUCTURE FIBREUSE DE RENFORT DE PIECES EN MATERIAU COMPOSITE A PORTION D'EPAISSEUR REDUITE**
FASERSTRUKTUR ZUR VERSTÄRKUNG VON VERBUNDWERKSTOFFTEILEN MIT EINEM TEIL MIT REDUZIERTER DICKE
FIBER STRUCTURE INTENDED TO REINFORCE COMPOSITE MATERIAL PARTS AND INCLUDING A PORTION HAVING A REDUCED THICKNESS

(30) Priorité: 14.12.2011 US 201161570379 P
(43) Date de publication de la demande: 22.10.2014
(73) Titulaire: Safran Aircraft Engines, 75015 Paris (FR)
(72) Inventeur: DAMBRINE, Bruno, Jacques, Gérard, F-77820 Le Chatelet en Brie (FR); COUPE, Dominique, Medford, Massachusetts 02155 (US); GOERING, Jonathan, York, Maine 03909 (US); MAHIEU, Jean-Noël, 94250 Gentilly (FR)
(74) Mandataire: Cabinet Beau de Loménie
(86) Numéro de dépôt international: PCT/FR2012/052851
(87) Numéro de publication internationale: WO 2013/088038

(56) Documents cités:
- US-A1- 2011 076 431
- US-A1- 2011 176 927

## Description

### Arrière-plan de l'invention

La présente invention concerne la réalisation de pièces en matériau composite et plus particulièrement la réalisation de structures fibreuses de renfort pour de telles pièces.

Un domaine d'application de l'invention est plus particulièrement la réalisation de pièces en matériau composite structural, c'est-à-dire des pièces de structure à renfort fibreux et densifié par une matrice. Les matériaux composites permettent de réaliser des pièces ayant une masse globale moins élevée que ces mêmes pièces lorsqu'elles sont réalisées en matériau métallique.

Dans le cadre de la réalisation de structures fibreuses par tissage multicouche destinées à constituer le renfort fibreux d'une pièce en matériau composite, telle qu'une aube de moteur aéronautique, on doit retirer au cours du tissage de la structure des fils à la fois dans le sens chaîne et dans le sens trame pour respecter les diminutions d'épaisseurs dans la pièce, comme par exemple au niveau de l'échasse ou du bord de fuite de l'aube, afin d'obtenir une préforme fibreuse qui présente la forme et les dimensions quasi-définitives de l'aube (« net shape »). Ces retraits de fils se traduisent, au cours du tissage, par des fils présents localement en surface de la structure fibreuse qui ne sont pas tissés (flottées) et qui sont ensuite découpés lors d'une seconde opération.

La découpe de ces fils en surface de la structure engendre localement des désalignements de fils entraînant dans la pièce, une fois la matrice déposée, des zones riches en matrice sources potentielles de microfissurations dans le matériau de la pièce.

En outre, en raison de l'armure présente en surface du tissu, par exemple une armure satin, tous les flottés présents après le dernier point de liage du fil extrait de la structure doivent être découpés, ce qui entraîne localement une variation importante du taux de fibres.

Le document US 2011/076421 divulgue une structure fibreuse comprenant une portion d'épaisseur décroissante avec retrait de fils selon le préambule de la revendication 1.

### Objet et résumé de l'invention

Il est donc souhaitable de pouvoir disposer de structures fibreuses ayant la forme et les dimensions quasi-définitives de la pièce en matériau composite à réaliser, en particulier au niveau de portions d'épaisseur décroissantes, et ce en présentant un état de surface régulier et un taux de variation de fibre minimal dans ces portions.

A cet effet, selon l'invention, il est proposé une structure fibreuse de renfort de pièce en matériau composite, ladite structure étant tissée en une seule pièce par tissage multicouche entre une première pluralité de couches de fils et une deuxième pluralité de couches de fils, la structure fibreuse comprenant au moins une portion d'épaisseur décroissante,
caractérisée en ce que, dans la portion d'épaisseur décroissante, la structure fibreuse comporte en surface :
- une ou plusieurs parties de retrait de fils en continuité de surface dans chacune desquelles des fils d'une couche de fils de la première pluralité de couches de fils sous-jacente à la couche de fils de la première pluralité de couche de fils située en surface de la structure sont interrompus,
- une ou plusieurs parties de retrait de fils en discontinuité de surface dans chacune desquelles des fils de la couche de fils de la première pluralité de couche de fils située en surface de la structure sont interrompus, chaque fil interrompu étant remplacé en surface de la structure par un fil d'une couche de fils sous-jacente de la première pluralité de couches de fils,
et en ce que les fils des couches de la deuxième pluralité de couche de fils située en surface de la structure fibreuse sont continus sur au moins l'ensemble de la portion d'épaisseur décroissante.

La présence à la fois de parties de retrait de fils en continuité et en discontinuité de surface dans la structure fibreuse permet d'optimiser les zones de continuité des fils en surface et, par conséquent, de limiter les désalignements et les variations de taux de fibres en surface de la structure tout en facilitant le tissage d'une telle structure. En effet, si les fils, par exemple les fils de chaîne, situés en surface dans la portion d'épaisseur décroissante sont conservés continus sur toute la longueur de la portion, ces fils doivent croiser un nombre important de couches de trame en raison des retraits successifs des couches fils de trame tout au long de la portion d'épaisseur décroissante. Ces croisements entraînent des frottements importants qui peuvent érailler les fils de chaîne continus en surface et rendre le tissage de la structure plus difficile. En intercalant des parties de retrait de fils en discontinuité de surface entre des parties de retrait en continuité de surface, on évite de tels inconvénients car on reprend la continuité de surface avec de nouveaux fils à partir de la partie de retrait en discontinuité de surface.

Selon un aspect particulier de l'invention, dans chaque partie de discontinuité, chaque fil interrompu de la couche de la première pluralité de couches de fils est entrelacé avec au moins un fil d'une couche de la deuxième pluralité de couches de fils immédiatement avant sa sortie de la structure.

En entrelaçant ainsi le fil extrait de la structure fibreuse, on élimine le nombre de fils non tissés dus à la sortie du fil et qui doivent ensuite être découpés à l'issue du tissage. On réduit ainsi la variation du taux volumique de fibres au niveau des parties de retrait de fils en discontinuité de surface.

Selon un autre aspect de l'invention, la structure fibreuse présente une première et une deuxième faces externes s'étendant suivant une direction longitudinale, les parties de retrait de fils présentes sur la première face étant décalées longitudinalement par rapport aux parties de retrait de fils présentes sur la deuxième face afin d'équilibrer la structure fibreuse.

Selon encore un autre aspect de l'invention, la portion d'épaisseur décroissante présente, dans la direction des fils de la première pluralité de couches de fils, un nombre décroissant de couches de fils de la deuxième pluralité de couches de fils, la structure fibreuse comportant des parties de retrait de fils en discontinuité de surface réparties en fonction d'une décroissance déterminée du nombre de couches de fils de la deuxième pluralité de couches de fils.

L'invention a également pour objet une pièce en matériau composite comprenant une structure fibreuse selon l'invention densifiée par une matrice. Cette pièce pouvant notamment constituer une aube de moteur aéronautique.

L'invention a également pour objet un turbopropulseur équipé d'une pluralité d'aubes selon l'invention.

L'invention vise encore un aéronef équipé d'au moins un turbopropulseur selon l'invention.

La présente invention a aussi pour objet un procédé de fabrication d'une structure fibreuse de renfort de pièce en matériau composite comprenant le tissage en une seule pièce par tissage multicouche entre une première pluralité de couches de fils et une deuxième pluralité de couches de fils, la structure fibreuse comprenant au moins une portion d'épaisseur décroissante,
caractérisé en ce que, lors du tissage de la portion d'épaisseur décroissante, on définit :
- des parties de retrait de fils en continuité de surface dans chacune desquelles des fils d'une couche de fils de la première pluralité de couches de fils sous-jacente de la couche de fils de la première pluralité de couches de fils située en surface de la structure ne sont plus tissés avec les fils des couches de la deuxième pluralité de couches de fils,
- des parties de retrait de fils en discontinuité de surface dans chacune desquelles des fils de la couche de fils de la première pluralité de couche de fils située en surface de la structure ne sont plus tissés avec les fils des couches de la deuxième pluralité de couches de fils, des fils d'une couche de fils sous-jacente de la première pluralité de couches de fils étant utilisés pour remplacer en surface de la texture les fils qui ne sont plus tissés à partir de la partie de discontinuité,
et en ce que les fils des couches de la deuxième pluralité de couches de fils située en surface de la texture fibreuse sont continus sur au moins l'ensemble de la portion d'épaisseur décroissante.

Selon un aspect particulier de l'invention, les fils de la couche de la première pluralité de couches de fils qui ne sont plus tissés à partir de la partie de discontinuité sont entrelacés avec au moins un fil d'une couche de la deuxième pluralité de couche de fils immédiatement avant leur sortie de la structure.

Selon un autre aspect de l'invention, la structure fibreuse présente une première et une deuxième faces externes s'étendant suivant une direction longitudinale, les parties de retrait de fils présentes sur la première face étant décalées longitudinalement par rapport aux parties de retrait de fils présentes sur la deuxième face.

Selon encore un autre aspect de l'invention, la portion d'épaisseur décroissante présente, dans la direction des fils de la première pluralité de couches de fils, un nombre décroissant de couches de fils de la deuxième pluralité de couches de fils, la structure fibreuse comportant des parties de retrait de fils en discontinuité réparties en fonction d'une décroissance déterminée du nombre de couches de fils de la deuxième pluralité de couches de fils.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique illustrant le tissage multicouche d'une structure fibreuse pour la fabrication d'une aube de moteur aéronautique conformément à un mode de réalisation de l'invention,
- la figure 2 est une vue en coupe trame à échelle agrandie d'une portion d'épaisseur décroissante de la structure fibreuse de la figure 1,
- la figure 3 est une vue en coupe chaîne à échelle agrandie d'une portion d'épaisseur décroissante de la structure fibreuse de la figure 1,
- la figure 4 est une vue schématique en perspective d'une préforme fibreuse d'aube issue de la structure fibreuse de la figure 1,
- la figure 5 est une vue schématique en perspective d'une aube en matériau composite obtenue par densification par une matrice de la préforme de la figure 4.

### Description détaillée de modes de réalisation

L'invention s'applique d'une manière générale à la réalisation de structures fibreuses aptes à constituer des renforts fibreux, ou préformes, pour la fabrication de pièces en matériau composite, en particulier des aubes de moteurs aéronautiques, les pièces étant obtenues par densification des structures fibreuses par une matrice. La matrice est typiquement une résine, dans le cas de matériaux composites utilisés à température relativement peu élevée, typiquement jusqu'à 300°C, ou un matériau réfractaire tel que du carbone ou céramique dans le cas de composites thermostructuraux.

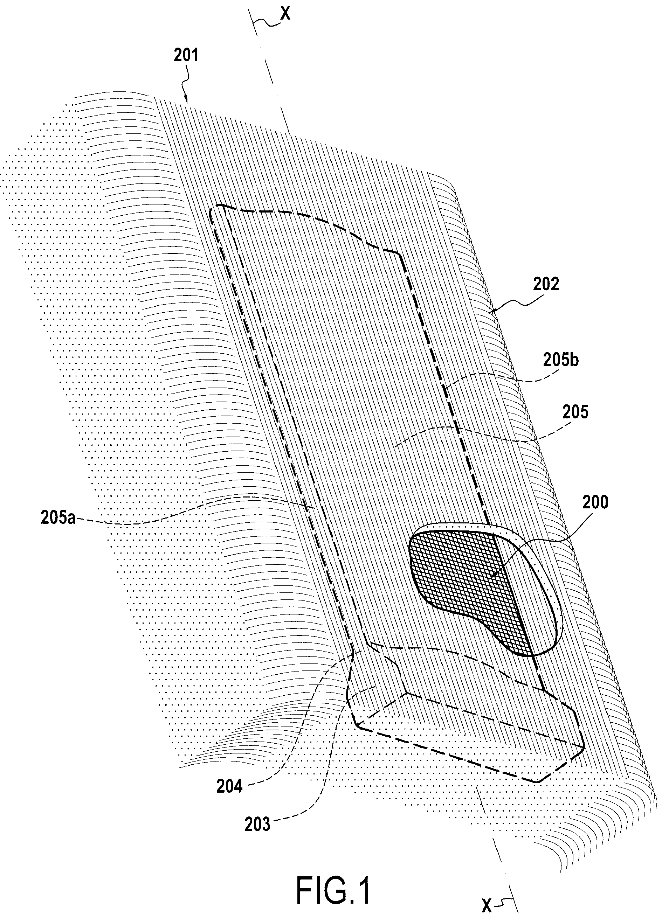

La figure 1 montre très schématiquement une structure fibreuse 200 destinée à former le renfort fibreux d'une aube de moteur aéronautique.

La structure fibreuse 200 est obtenue par tissage multicouche réalisé de façon connue au moyen d'un métier à tisser de type jacquard sur lequel on a disposé un faisceau de fils de chaînes ou torons 201 en une pluralité de couches, les fils de chaînes étant liés par des fils de trame 202 également disposés en une pluralité de couches. Un exemple détaillé de réalisation d'une préforme fibreuse destinée à former le renfort fibreux d'une aube pour moteur aéronautique est notamment décrit en détail dans les documents US 7 101 154, US 7 241 112 et WO 2010/061140 dont le contenu est incorporé ici par voie de référence.

La structure fibreuse 200 est tissée sous forme d'une bande s'étendant de façon générale dans une direction X correspondant à la direction longitudinale de l'aube à réaliser. La structure fibreuse présente une épaisseur variable déterminée en fonction de l'épaisseur longitudinale et de profil de la pale de l'aube à réaliser. Dans sa partie destinée à former une préforme de pied, la structure fibreuse 200 présente une surépaisseur 203 déterminée en fonction de l'épaisseur du pied de l'aube à réaliser et qui peut être réalisée en utilisant par exemple des fils de titre plus important ou un insert. La structure fibreuse 200 se prolonge par une portion d'épaisseur décroissante 204 destinée à former l'échasse de l'aube puis par une partie 205 destinée à former la pale de l'aube. La partie 205 présente dans une direction perpendiculaire à la direction X un profil à épaisseur variable entre son bord 205a destiné à former le bord d'attaque de l'aube et son bord 205b destiné à former le bord de fuite de l'aube à réaliser.

La structure fibreuse 200 est tissée en une seule pièce et doit présenter, après découpe des fils non tissés, la forme et les dimensions quasi-définitives de l'aube (« net shape »). A cet effet, dans les parties de variations d'épaisseur de la structure fibreuse, comme dans la portion d'épaisseur décroissante 204, la diminution d'épaisseur de la préforme est obtenue en retirant progressivement des couches de fils de chaîne et de trame au cours du tissage.

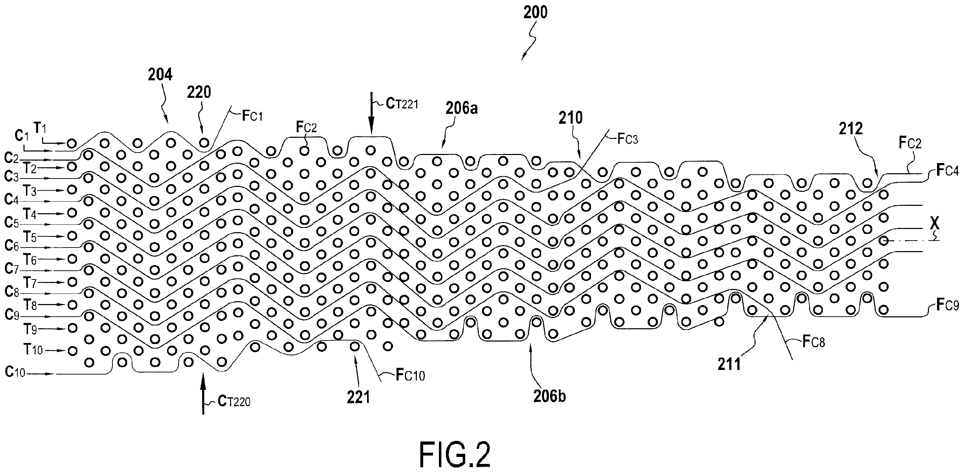

La figure 2 illustre le tissage vue en coupe trame d'une partie de la portion d'épaisseur décroissante 204 de la structure fibreuse 200, la structure 200 comprenant au début de la partie de portion d'épaisseur décroissante 204 dix couches de fils de chaîne C₁ à C₁₀ (illustrées ici sur une seule colonne) s'étendant dans la direction X et 10 couche de fils de trame T₁ à T₁₀. Dans l'exemple décrit ici, les faces externes ou peaux 206a et 206b de la structure fibreuse 200 sont réalisées avec une armure de type satin, ici un satin de 4 (flotté de trois fils de trame avant point de liage), tandis que la partie interne de la structure 200 est réalisée avec une armure de type « interlock ». Par armure « interlock », on entend ici une armure de tissage dans laquelle chaque couche de fils de chaîne lie plusieurs couches de fils de trame avec tous les fils d'une même colonne de chaîne ayant le même mouvement dans le plan de l'armure.

D'autres types de tissage multicouche connus pourront être utilisés, comme notamment ceux décrits dans le document WO 2006/136755 dont le contenu est incorporé ici par voie de référence.

La structure fibreuse selon l'invention peut être tissée notamment, mais non exclusivement, à partir de fils de fibres de carbone ou de céramique tel que du carbure de silicium.

Au fur et à mesure du tissage dans la direction X de la portion d'épaisseur décroissante 204, des fils de couches de fils de chaîne ainsi que des couches de fils de trame sont retirés de la structure 200. Dans l'exemple décrit ici, on retire une couche de fils de trame toutes les dix colonnes de trame.

Concernant les fils de chaîne, ceux-ci sont extraits ou sortis de la structure à un endroit déterminé appelé « partie de retrait de fils de chaîne » et ne sont plus tissés avec les fils de trame situés après la partie de retrait de fils de chaîne. Dans la présente invention, on distingue deux types de partie de retrait de fils de chaîne, à savoir des parties de retrait dites « en continuité de surface » et des parties de retrait dites « en discontinuité de surface».

Dans les parties de retrait en continuité de surface, on retire de la texture des fils de chaîne appartenant à une couche de fils de chaîne sous-jacente à la couche de fils de chaîne située en surface de la structure comme c'est le cas par exemple, des parties de retrait en continuité de surface 210, 211 et 212 illustrées sur la figure 2. Plus précisément, au niveau de la partie 210, on retire de la structure le fil de chaîne F_{C3} appartenant à la couche de fils de chaîne C₃ située à cet endroit de la structure fibreuse en-dessous de la couche de fils de chaîne C₂ située en surface de la structure. Il en est de même pour les parties 211 et 212 dans lesquelles on retire de la texture respectivement les fils de chaîne Fcs et F_{C4} appartenant aux couches de fils de chaîne C₈ et C₄ situées respectivement en-dessous des couches de fils de chaînes de surface C₉ et C₂.

En retirant les fils de chaîne d'une couche sous-jacente à la couche fils de chaîne située en surface de la structure fibreuse, on assure une continuité des couches de fils de chaîne à la surface de la préforme, ce qui permet notamment d'éviter des désalignements de fils, comme c'est le cas lorsque l'on découpe systématiquement des fils en surface entraînant après densification l'apparition de zones riches en résine sources de microfissurations dans le matériau composite. En outre, les parties de retrait de fils de chaîne en continuité de surface permettent de réduire la variation du taux de fibres à cet endroit de la structure.

Cependant, si l'on conserve en surface de la structure fibreuse les fils de la même couche de fils de chaîne sur toute la longueur de la portion d'épaisseur décroissante, on impose aux fils de cette couche de croiser un nombre important de couches de fils de trame en raison de leur retrait progressif au fur et à mesure du tissage. Ces croisements peuvent induire des frottements importants qui peuvent érailler les fils de chaîne et rendre plus difficile le tissage de la structure.

A cet effet et conformément à l'invention, la structure fibreuse comprend également des parties de retrait de fils de chaîne en discontinuité de surface dans lesquelles on retire de la structure fibreuse les fils de chaîne appartenant à la couche de fils de chaîne située en surface de la structure fibreuse comme c'est le cas des parties 220 et 221 illustrées sur la figure 2. Plus précisément, au niveau de la partie 220, on retire le fil F_{C1} appartenant à la couche de fils de chaîne C₁ située en surface à cet endroit de la structure fibreuse juste après la colonne de fils de trame C_{T220}. Une fois extrait de la structure fibreuse, le fil F_{C1} est remplacé en surface par le fil F_{C2} de la couche de fils de chaîne sous-jacente C₂ qui est tissé après la partie 220 suivant la même armure satin que pour le fil F_{C1} avant la partie 220. De même, au niveau de la partie 221, on retire le fil F_{C10} appartenant à la couche de fils de chaîne C₁₀ située en surface à cet endroit de la structure fibreuse juste après la colonne de fils de trame C_{T221}. Une fois extrait de la structure fibreuse, le fil F_{C10} est remplacé en surface par le fil F_{C9} de la couche de fils de chaîne sous-jacente C₉ qui est tissé après la partie 221 suivant la même armure satin que pour le fil F_{C9} avant la partie 221.

L'occurrence des parties de retrait de fils de chaîne en discontinuité de surface peut être déterminée en fonction du nombre de couches de trame retirées afin de limiter les frottements et améliorer la tissabilité. A titre d'exemple, la structure fibreuse peut comporter sur chacune de ses faces une partie de retrait de fils de chaîne en discontinuité de surface lorsque cinq couches de trame ont été retirées puis une autre lorsque cinq nouvelles couches de trame auront été retirées et ainsi de suite. La structure fibreuse selon l'invention comprend de préférence une majorité de partie de retrait de fils en continuité de surface par rapport aux parties de retrait de fils en discontinuité de surface.

Les parties de retrait de fils, en continuité ou en discontinuité de surface, présentes sur une face de la structure fibreuse sont de préférence décalées suivant la direction longitudinale de la structure par rapport aux partie de retraits présentes sur l'autre face de ladite structure comme illustrées sur la figure 2 afin d'équilibrer la structure fibreuse.

Les parties de retrait de fils, en continuité ou en discontinuité de surface, peuvent être également présentes seulement sur une seule face de la structure fibreuse afin d'optimiser l'état de surface d'une face par rapport à l'autre.

Par ailleurs, selon un aspect de l'invention, lorsqu'un fil de chaîne doit être sorti de la structure fibreuse, ce dernier est systématiquement entrelacé avec au moins un fil de la colonne de fils de trame située immédiatement avant la partie de retrait d'où le fil de chaîne est extrait, et ce indépendamment du motif de tissage à cet endroit de la structure fibreuse. Par exemple, sur la figure 2, le fil de chaîne Fci extrait de la structure fibreuse au niveau de la partie de retrait 221 est entrelacé avec deux fils de trame consécutifs de la couche de fil de trame T₉ alors que, selon le motif de satin de 4 réalisé jusqu'ici en surface de la structure, le fil de chaîne F_{C10} aurait dû sortir de la structure au niveau de la colonne précédant la partie 221 sans entrelacer le fil de trame de la colonne de fils de trame C_{T220} situé en surface de la structure. Au niveau de la partie 220, aucun entrelacement forcé du fil de chaîne F_{C1} n'est ici nécessaire car celui-ci est extrait de la structure fibreuse 200 juste après son point de liage avec le fil de trame situé en surface de la colonne de fils de trame C_{T220}.

En entrelaçant systématiquement le fil de chaîne avec au moins le dernier fil de trame situé juste avant sa sortie de la structure fibreuse, on limite le nombre de fils de trame non tissés dus à la sortie du fil de chaîne et qui doivent ensuite être découpés à l'issue du tissage. On réduit ainsi la variation du taux volumique de fibres au niveau des parties de retrait de fils de chaîne en discontinuité de surface.

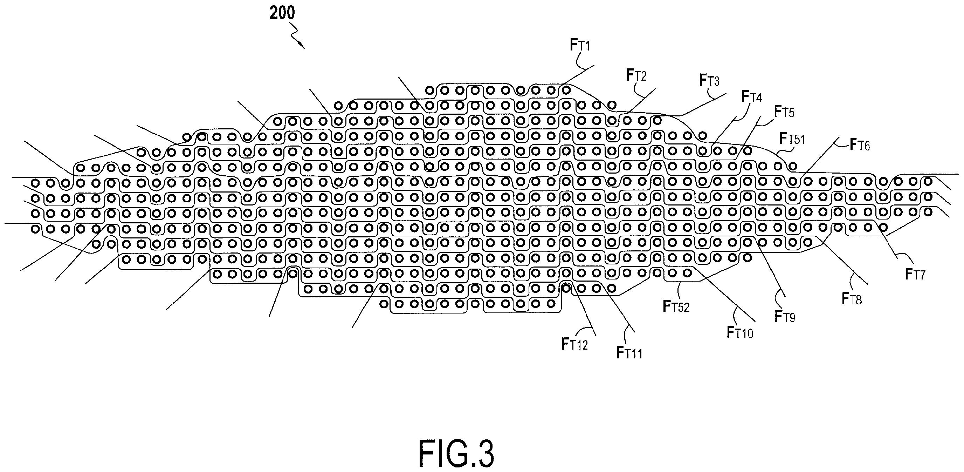

Dans l'exemple décrit ici, ce sont les fils de chaîne situés en surface de la structure fibreuse qui sont extraits au niveau de parties de retrait en discontinuité de surface. Dans ce cas, on maintient la continuité des fils de trame situés en surface de la structure fibreuse comme illustrée sur la figure 3 qui montre le tissage vue en coupe chaîne d'une partie du profil à épaisseur variable de la partie 205 de la structure destinée à former la pale de l'aube et dans laquelle les fils de trame F_{TS1} et F_{TS2} situés en surface de chaque côté de la structure fibreuse 200 sont continus sur l'ensemble de la structure tandis que les fils de trame F_{T1} à F_{T10} appartenant aux couches fils de trame sous-jacente aux couches de fils de trame de surface auxquelles appartiennent respectivement les fils F_{T51} et F_{T52} sont progressivement extrait de la texture. On notera que l'armure de tissage représentée en figure 3 est différente de l'armure représentée en figure 2.

Selon une variante de la présente invention, la texture fibreuse comprend des parties de retrait de fils en discontinuité et en continuité de surface au niveau des couches de fils de trame situées en surface de la texture. Dans ce cas, on maintient la continuité des fils de chaîne situés en surface de la structure fibreuse.

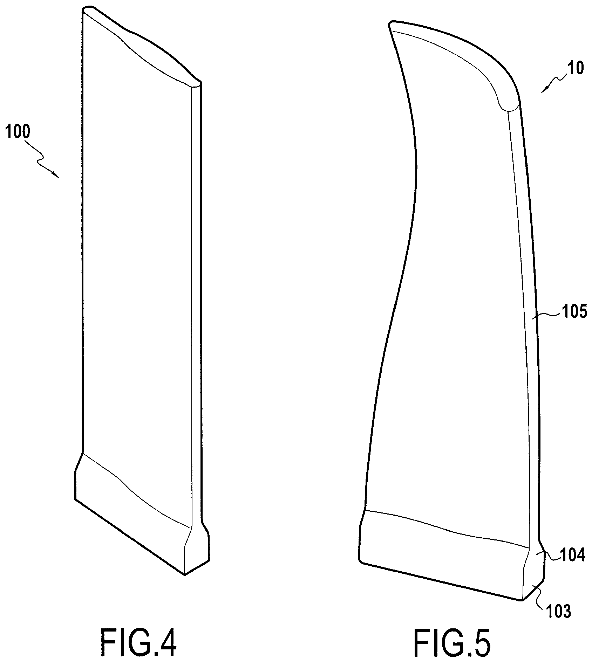

Une fois le tissage de la structure fibreuse 200 achevé, on découpe les fils non tissés et notamment ceux qui ont été extraits de la texture au niveau des parties de retrait en continuité et en discontinuité de surface. On obtient alors la préforme fibreuse 100 illustrée sur la figure 4 et tissée en une seul pièce.

On procède ensuite à la densification de la préforme fibreuse 100 afin de former une aube 10 en matériau composite illustrée sur la figure 4. La densification de la préforme fibreuse destinée à former le renfort fibreux de la pièce à fabriquer consiste à combler la porosité de la préforme, dans tout ou partie du volume de celle-ci, par le matériau constitutif de la matrice. Cette densification peut être réalisée de façon connue en soi suivant le procédé par voie liquide (CVL) ou le procédé par voie gazeuse (CVI), ou encore suivant un enchaînement de ces deux procédés.

Le procédé par voie liquide consiste à imprégner la préforme par une composition liquide contenant un précurseur du matériau de la matrice. Le précurseur se présente habituellement sous forme d'un polymère, tel qu'une résine époxyde à hautes performances, éventuellement dilué dans un solvant. La préforme est placée dans un moule pouvant être fermé de manière étanche avec un logement ayant la forme de l'aube finale moulée. Ensuite, on referme le moule et on injecte le précurseur liquide de matrice (par exemple une résine) dans tout le logement pour imprégner toute la partie fibreuse de la préforme.

La transformation du précurseur en matrice, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser.

Dans le cas de la formation d'une matrice carbone ou céramique, le traitement thermique consiste à pyrolyser le précurseur pour transformer la matrice en une matrice carbone ou céramique selon le précurseur utilisé et les conditions de pyrolyse. A titre d'exemple, des précurseurs liquides de céramique, notamment de SiC, peuvent être des résines de type polycarbosilane (PCS) ou polytitanocarbosilane (PTCS) ou polysilazane (PSZ), tandis que des précurseurs liquides de carbone peuvent être des résines à taux de coke relativement élevé, telles que des résines phénoliques. Plusieurs cycles consécutifs, depuis l'imprégnation jusqu'au traitement thermique, peuvent être réalisés pour parvenir au degré de densification souhaité.

Selon un aspect de l'invention, dans le cas notamment de la formation d'une matrice organique, la densification de la préforme fibreuse peut être réalisée par le procédé bien connu de moulage par transfert dit RTM ("Resin Transfert Moulding"). Conformément au procédé RTM, on place la préforme fibreuse dans un moule présentant la forme extérieure de la pièce à réaliser. Une résine thermodurcissable est injectée dans l'espace interne du moule qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La densification de la préforme fibreuse peut-être également réalisée, de façon connue, par voie gazeuse par infiltration chimique en phase vapeur de la matrice (CVI). La préforme fibreuse correspondant au renfort fibreux de l'aube à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice SiC peut être obtenue avec du méthyltrichlorosilane (MTS) donnant du SiC par décomposition du MTS tandis qu'une matrice carbone peut être obtenue avec des gaz hydrocarbures tels que méthane et/ou propane donnant le carbone par craquage.

Une densification combinant voie liquide et voie gazeuse peut être également utilisée pour faciliter la mise en oeuvre, limiter les coûts et les cycles de fabrication tout en obtenant des caractéristiques satisfaisantes pour l'utilisation envisagée.

Après densification, on obtient une aube 10 en matériau composite qui, comme illustrée sur la figure 5, comporte dans sa partie inférieure un pied 103 formé par la surépaisseur 203 de la structure fibreuse 200 qui se prolonge par une échasse 104 formée par la portion d'épaisseur décroissante 204 de la structure 200 et une pale 105 formée par la partie 205 de la structure fibreuse 200.

## Revendications

1. Structure fibreuse (200) de renfort de pièce en matériau composite, ladite structure étant tissée en une seule pièce par tissage multicouche entre une première pluralité de couches de fils (C₁-C₁₀) et une deuxième pluralité de couches de fils (T₁-T₁₀), la structure fibreuse comprenant au moins une portion d'épaisseur décroissante (204), où, dans la portion d'épaisseur décroissante, la structure fibreuse comporte en surface :
- une ou plusieurs parties de retrait de fils en continuité de surface (210) dans chacune desquelles des fils (F_{C3}) d'une couche de fils (C₃) de la première pluralité de couches de fils sous-jacente à la couche de fils (C₂) de la première pluralité de couche de fils située en surface de la structure sont interrompus,
- une ou plusieurs parties de retrait de fils en discontinuité de surface (220) dans chacune desquelles des fils (F_{c1}) de la couche de fils (C₁) de la première pluralité de couche de fils située en surface de la structure sont interrompus, chaque fil interrompu (F_{C1}) étant remplacé en surface de la structure par un fil (F_{C2}) d'une couche de fils sous-jacente (C₂) de la première pluralité de couches de fils, et les fils des couches de la deuxième pluralité de couches de fils (T₁-T₁₀) situés en surface de la structure fibreuse (200) sont continus sur au moins l'ensemble de la portion d'épaisseur décroissante (204),
**caractérisée en ce que**,
les faces externes (206a, 206b) de la structure fibreuse sont réalisées avec une armure de type satin tandis que la partie interne de la structure fibreuse (200) est réalisée avec une armure de type interlock, et
le fil(Fc2) d'une couche de fils sous-jacente à la première pluralité de couches de fils est tissé après la partie de retrait de fils en discontinuité de surface (220) avec l'armure de type satin.

2. Structure fibreuse selon la revendication 2, **caractérisée en ce que**, dans chaque partie de discontinuité (220), chaque fil (F_{c1}) interrompu de la couche (C₁) de la première pluralité de couches de fils est entrelacé avec au moins un fil d'une couche de la deuxième pluralité de couches de fils (T₁-T₁₀) immédiatement avant sa sortie de la structure.

3. Structure selon la revendication 1 ou 2, **caractérisée en ce que** les première et deuxième faces externes (206a, 206b) de la structure (200) s'étendant suivant une direction longitudinale et **en ce que** les parties de retrait de fils (220, 210, 212) présentes sur la première face (206a) sont décalées longitudinalement par rapport aux parties de retrait de fils (221, 211) présentes sur la deuxième face (206b).

4. Structure fibreuse selon l'une quelconque des revendications 1 à 3, **caractérisée en ce que** la portion d'épaisseur décroissante (204) présente, dans la direction des fils de la première pluralité de couches de fils (C₁-C₁₀), un nombre décroissant de couches de fils de la deuxième pluralité de couches de fils (T₁-T₁₀) et **en ce que** la structure fibreuse (200) comporte des parties de retrait de fils en discontinuité (220, 221) réparties en fonction d'une décroissance déterminée du nombre de couches de fils de la deuxième pluralité de couches de fils.

5. Pièce en matériau composite comprenant un renfort fibreux densifié par une matrice dans laquelle le renfort fibreux est formé par une structure fibreuse selon l'une quelconque des revendications 1 à 4.

6. Pièce selon la revendication 5, **caractérisée en ce qu'**elle constitue une aube (10) de moteur aéronautique.

7. Turbopropulseur comprenant une pluralité d'aube (10) selon la revendication 6.

8. Aéronef équipé d'au moins un turbopropulseur selon la revendication 7.

9. Procédé de fabrication d'une structure fibreuse (200) de renfort de pièce en matériau composite comprenant le tissage en une seule pièce par tissage multicouche entre une première pluralité de couches de fils (C₁-C₁₀) et une deuxième pluralité de couches de fils (T₁-T₁₀), la structure fibreuse comprenant au moins une portion d'épaisseur décroissante (204), où, lors du tissage de la portion d'épaisseur décroissante, on définit :
- des parties de retrait de fils en continuité de surface (210) dans chacune desquelles des fils (F_{C3}) d'une couche de fils (C₃) de la première pluralité de couches de fils sous-jacente de la couche de fils (C₂) de la première pluralité de couches de fils située en surface de la structure ne sont plus tissés avec les fils des couches de la deuxième pluralité de couches de fils,
- des parties de retrait de fils en discontinuité de surface (220) dans chacune desquelles des fils (F_{C1}) de la couche de fils (C₁) de la première pluralité de couche de fils située en surface de la structure ne sont plus tissés avec les fils des couches de la deuxième pluralité de couches de fils, des fils (F_{C2}) d'une couche de fils sous-jacente (C₂) de la première pluralité de couches de fils étant utilisés pour remplacer en surface de la texture les fils qui ne sont plus tissés à partir de la partie de discontinuité, et les fils des couches de la deuxième pluralité de couches de fils (T₁-T₁₀) situés en surface de la texture fibreuse (200) sont continus sur au moins l'ensemble de la portion d'épaisseur décroissante (204),
**caractérisé en ce que**
les faces externes (206a, 206b) de la structure fibreuse sont réalisées avec une armure de type satin tandis que la partie interne de la structure fibreuse (200) est réalisée avec une armure de type interlock, et
le fils (Fc2) d'une couche de fils sous-jacente à la première pluralité de couches de fils sont tissé après la partie de retrait de fils en discontinuité de surface (220) avec l'armure de type satin.

10. Procédé selon la revendication 9, **caractérisé en ce que**, les fils (F_{c1}) de la couche (C₁) de la première pluralité de couche de fils qui ne sont plus tissés à partir de la partie de discontinuité (220) sont entrelacés avec au moins un fil d'une couche de la deuxième pluralité de couches de fils (T₁-T₁₀) immédiatement avant leur sortie de la structure.

11. Procédé selon la revendication 9 ou 10, **caractérisé en ce que** les première et deuxième faces externes (206a, 206b) de la structure (200) s'étendant suivant une direction longitudinale et **en ce que** les parties de retrait de fils (220, 210, 212) présentes sur la première face (206a) sont décalées longitudinalement par rapport aux parties de retrait de fils (221, 211) présentes sur la deuxième face (206b).

12. Procédé l'une quelconque des revendications 9 à 11, **caractérisé en ce que** la portion d'épaisseur décroissante (204) présente, dans la direction des fils de la première pluralité de couches de fils (C₁-C₁₀), un nombre décroissant de couches de fils de la deuxième pluralité de couches (T₁-T₁₀) de fils et **en ce que** la structure fibreuse (200) comporte des parties de retrait de fils en discontinuité (220, 221) réparties en fonction d'une décroissance déterminée du nombre de couches de fils de la deuxième pluralité de couches de fils.

## Patentansprüche

1. Fasergebilde (200) zur Verstärkung eines Teils aus Verbundmaterial, wobei das Gebilde in einem einzigen Stück durch mehrlagige Verwebung zwischen einer ersten Vielzahl von Lagen aus Fäden (C₁-C₁₀) und einer zweiten Vielzahl von Lagen aus Fäden (T₁-T₁₀) gewebt ist und das Fasergebilde zumindest einen Abschnitt mit abnehmender Dicke (204) umfasst, wobei das Fasergebilde in dem Abschnitt mit abnehmender Dicke an der Oberfläche beinhaltet:
- einen oder mehrere Teile mit herausgezogenen Fäden (210), welche die Oberfläche fortsetzen, in welchen jeweils Fäden (F_{C3}) einer Lage aus Fäden (C₃) der ersten Vielzahl von Lagen aus Fäden, die unter der Lage aus Fäden (C₂) der ersten Vielzahl von Lagen aus Fäden liegt, die sich an der Oberfläche des Gebildes befindet, unterbrochen sind,
- einen oder mehrere Teile mit herausgezogenen Fäden (220), welche die Oberfläche nicht fortsetzen, in welchen jeweils Fäden (F_{c1}) der Lage aus Fäden (C₁) der ersten Vielzahl von Lagen aus Fäden, die sich an der Oberfläche des Gebildes befindet, unterbrochen sind, wobei jeder unterbrochene Faden (F_{C1}) an der Oberfläche des Gebildes durch einen Faden (F_{C2}) einer Lage aus Fäden (C₂) ersetzt ist, die unter der ersten Vielzahl von Lagen aus Fäden liegt, und die Fäden der Lagen der zweiten Vielzahl von Lagen aus Fäden (T₁-T₁₀), die sich an der Oberfläche des Fasergebildes (200) befinden, über zumindest den gesamten Abschnitt mit abnehmender Dicke (204) durchgängig sind,
**dadurch gekennzeichnet, dass**,
die Außenseiten (206a, 206b) des Fasergebildes mit einer Armierung vom Satintyp ausgeführt sind, während der innere Teil des Fasergebildes (200) mit einer Armierung vom Interlock-Typ ausgeführt ist, und
der Faden (Fc2) einer Lage aus Fäden, die unter der ersten Vielzahl von Lagen von Fäden liegt, nach dem Teil mit herausgezogenen Fäden (220), der die Oberfläche nicht fortsetzt, mit der Armierung vom Satintyp gewebt ist.

2. Fasergebilde nach Anspruch 2, **dadurch gekennzeichnet, dass** in jedem nicht durchgängigen Teil (220) jeder unterbrochene Faden (F_{c1}) der Lage (C₁) der ersten Vielzahl von Lagen aus Fäden unmittelbar vor seinem Austritt aus dem Gebilde mit zumindest einem Faden einer Lage der zweiten Vielzahl von Lagen aus Fäden (T₁-T₁₀) verflochten ist.

3. Gebilde nach Anspruch 1 oder 2, **dadurch gekennzeichnet, dass** die erste und zweite Außenseite (206a, 206b) des Gebildes (200) sich einer Längsrichtung folgend erstrecken, und dass die Teile mit herausgezogenen Fäden (220, 210, 212), die auf der ersten Seite (206a) vorhanden sind, der Länge nach in Bezug auf die Teile mit herausgezogenen Fäden (221, 211), die auf der zweiten Seite (206b) vorhanden sind, versetzt sind.

4. Fasergebilde nach einem der Ansprüche 1 bis 3, **dadurch gekennzeichnet, dass** der Abschnitt mit abnehmender Dicke (204) in der Richtung der Fäden der ersten Vielzahl von Lagen aus Fäden (C₁-C₁₀) eine abnehmende Anzahl von Lagen aus Fäden der zweiten Vielzahl von Lagen aus Fäden (T₁-T₁₀) aufweist, und dass das Fasergebilde (200) nicht durchgängige Teile mit herausgezogenen Fäden (220, 221) beinhaltet, die in Abhängigkeit von einer bestimmten Abnahme der Anzahl von Lagen aus Fäden der zweiten Vielzahl von Lagen aus Fäden verteilt sind.

5. Teil aus Verbundmaterial, das eine Faserverstärkung umfasst, die durch eine Matrix verdichtet wird, wobei die Faserverstärkung durch ein Fasergebilde nach einem der Ansprüche 1 bis 4 gebildet wird.

6. Teil nach Anspruch 5, **dadurch gekennzeichnet, dass** es einen Flügel (10) eines Flugzeugmotors bildet.

7. Turboprop, umfassend eine Vielzahl von Flügeln (10) nach Anspruch 6.

8. Luftfahrzeug, das mit zumindest einem Turboprop nach Anspruch 7 ausgerüstet ist.

9. Verfahren zur Herstellung eines Fasergebildes (200) zur Verstärkung eines Teils aus Verbundmaterial, welches das Verweben in einem einzigen Stück durch mehrlagiges Verweben zwischen einer ersten Vielzahl von Lagen aus Fäden (C₁-C₁₀) und einer zweiten Vielzahl von Lagen aus Fäden (T₁-T₁₀) umfasst, wobei das Fasergebilde zumindest einen Abschnitt mit abnehmender Dicke (204) umfasst, wobei bei der Verwebung des Abschnitts mit abnehmender Dicke definiert werden:
- Teile mit herausgezogenen Fäden (210), welche die Oberfläche fortsetzen, in welchen jeweils Fäden (F_{C3}) einer Lage aus Fäden (C₃) der ersten Vielzahl von Lagen aus Fäden, welche unter der Lage aus Fäden (C₂) der ersten Vielzahl von Lagen aus Fäden liegt, die sich an der Oberfläche des Gebildes befindet, nicht mehr mit den Fäden der Lagen der zweiten Vielzahl von Lagen aus Fäden verwebt sind,
- Teile mit herausgezogenen Fäden (220), welche die Oberfläche nicht fortsetzen, in welchen jeweils Fäden (F_{C1}) der Lage aus Fäden (C₁) der ersten Vielzahl von Lagen aus Fäden, die sich an der Oberfläche des Gebildes befindet, nicht mehr mit den Fäden der Lagen der zweiten Vielzahl von Lagen aus Fäden verwebt sind, wobei Fäden (F_{C2}) einer Lage aus Fäden (C₂), die unter der ersten Vielzahl von Lagen aus Fäden liegt, verwendet werden, um an der Oberfläche der Textur die Fäden zu ersetzen, die nicht mehr ausgehend von dem nicht fortgesetzten Teil verwebt sind,
und wobei die Fäden der Lagen der zweiten Vielzahl von Lagen aus Fäden (T₁-T₁₀), die sich an der Oberfläche der Fasertextur (200) befinden, zumindest bis zur Gesamtheit des Abschnitts mit abnehmender Dicke (204) fortgesetzt werden,
**dadurch gekennzeichnet, dass**
die Außenseiten (206a, 206b) des Fasergebildes mit einer Armierung vom Satintyp ausgeführt sind, während der innere Teil des Fasergebildes (200) mit einer Armierung vom Interlock-Typ ausgeführt ist, und
die Fäden (F_{C2}) einer Lage aus Fäden, die unter der ersten Vielzahl von Lagen aus Fäden liegt, nach dem Teil mit herausgezogenen Fäden (220), der die Oberfläche nicht fortsetzt, mit der Armierung vom Satintyp gewebt sind.

10. Verfahren nach Anspruch 9, **dadurch gekennzeichnet, dass** die Fäden (F_{c1}) der Lage (C₁) der ersten Vielzahl von Lagen aus Fäden, die nicht mehr ausgehend von dem nicht fortgesetzten Teil (220) verwebt sind, unmittelbar vor ihrem Austritt aus dem Gebilde mit zumindest einem Faden einer Lage der zweiten Vielzahl von Lagen aus Fäden (T₁-T₁₀) verflochten sind.

11. Verfahren nach Anspruch 9 oder 10, **dadurch gekennzeichnet, dass** die erste und zweite Außenseite (206a, 206b) des Gebildes (200) sich einer Längsrichtung folgend erstrecken, und dass die Teile mit herausgezogenen Fäden (220, 210, 212), die auf der ersten Seite (206a) vorhanden sind, der Länge nach in Bezug auf die Teile mit herausgezogenen Fäden (221, 211), die auf der zweiten Seite (206b) vorhanden sind, versetzt sind.

12. Verfahren nach einem der Ansprüche 9 bis 11, **dadurch gekennzeichnet, dass** der Abschnitt mit abnehmender Dicke (204) in der Richtung der Fäden der ersten Vielzahl von Lagen aus Fäden (C₁-C₁₀) eine abnehmende Anzahl von Lagen aus Fäden der zweiten Vielzahl von Lagen (T₁-T₁₀) aus Fäden aufweist, und dass das Fasergebilde (200) nicht fortgesetzte Teile mit herausgezogenen Fäden (220, 221) beinhaltet, die in Abhängigkeit von einer bestimmten Abnahme der Anzahl von Lagen aus Fäden der zweiten Vielzahl von Lagen aus Fäden verteilt sind.

## Claims

1. A fiber structure (200) for reinforcing a composite material part, said structure being woven as a single piece by multilayer weaving between a first plurality of layers of yarns (C₁-C₁₀) and a second plurality of layers of yarns (T₁-T₁₀), the fiber structure including at least one portion of decreasing thickness (204), wherein in the portion of decreasing thickness, the fiber structure includes at its surface:
• one or more yarn withdrawal parts in surface continuity (210) in each of which yarns (F_{C3}) are interrupted that belong to a layer of yarns (C₃) of the first plurality of layers of yarns underlying the layer of yarns (C₂) of the first plurality of layers of yarns situated at the surface of the structure; and
• one or more yarn withdrawal parts in surface discontinuity (220) in each of which yarns (F_{C1}) are interrupted in the layer of yarns (C₁) of the first plurality of layers of yarns situated in the surface of the structure, each interrupted yarn (C₁) being replaced in the surface of the structure by a yarn (F_{C2}) of a layer of yarns (C₂) underlying the first plurality of layers of yarns; and the yarns of the layers of the second plurality of layers of yarns (T₁-T₁₀) situated at the surface of the fiber structure (200) are continuous over at least the entire portion of decreasing thickness (204), the structure being **characterized in that** the external faces (206a, 206b) of the fiber structure are made using a satin type weave while the internal part of the fiber structure (200) is made using an interlock type weave, and the yarn (F_{C2}) of a layer of yarns underlying the first plurality of layers of yarns is weaved after yarn withdrawal part in surface discontinuity (220) using the satin type weave.

2. A fiber structure according to claim 2, **characterized in that** in each part in surface discontinuity (220), each interrupted yarn (F_{C1}) of the layer (C₁) of the first plurality of layers of yarns is interlaced with at least one yarn of a layer of the second plurality of layers of yarns (T₁-T₁₀) immediately before exiting the structure.

3. A structure according to claim 1 or claim 2, **characterized in that** the first and second outside faces (206a, 206b) extending in a longitudinal direction, and **in that** the yarn withdrawal parts (220, 210, 212) present in the first face (206a) are longitudinally offset relative to the yarn withdrawal parts (221, 211) present in the second face (206b).

4. A fiber structure according to any one of claims 1 to 3, **characterized in that** the portion of decreasing thickness (204) presents, in the direction of the yarns of the first plurality of layers of yarns (C₁-C₁₀), a decreasing number of layers of yarns of the second plurality of layers of yarns (T₁-T₁₀), and **in that** the fiber structure (200) includes yarn withdrawal parts in surface discontinuity (220, 221) that are distributed as a function of a determined decrease in the number of layers of yarns of the second plurality of layers of yarns.

5. A composite material part comprising fiber reinforcement densified by a matrix, wherein the fiber reinforcement is formed by a fiber structure according to any one of claims 1 to 4.

6. A part according to claim 5, **characterized in that** it constitutes an aeroengine blade.

7. A turboprop including a plurality of blades (10) according to claim 6.

8. An aircraft fitted with at least one turboprop according to claim 7.

9. A method of fabricating a fiber structure (200) for reinforcing a composite material part, the method comprising weaving as a single piece by multilayer weaving between a first plurality of layers of yarns (C₁-C₁₀) and a second plurality of layers of yarns (T₁-T₁₀), the fiber structure including at least one portion of decreasing thickness (204); wherein during the weaving of the portion of decreasing thickness, there are defined:
• yarn withdrawal parts in surface continuity (210) in each of which yarns (F_{C3}) of a layer of yarns (C₃) of the first plurality of layers of yarns underlying the layer of yarns (C₂) of the first plurality of layers of yarns situated at the surface of the structure are no longer woven with the yarns of the layers of the second plurality of layers of yarns; and
• yarn withdrawal parts (220) in surface discontinuity in each of which yarns (F_{C1}) of the layer of yarns (C₁) of the first plurality of layers of yarns situated in the surface of the structure are no longer woven with the yarns of the layers of the second plurality of layers of yarns, yarns (F_{C2}) from a layer of yarns (C₂) underlying the first plurality of layers of yarns being used to replace in the surface of the texture the yarns that are no longer woven as from the surface discontinuity part; and
• the yarns of the layers of the second plurality of layers of yarns (T₁-T₁₀) situated at the surface of the fiber texture (200) are continuous, at least over the entire portion of decreasing thickness (204), the method being **characterized in that** the external faces (206a, 206b) of the fiber structure are made using a satin type weave while the internal part of the fiber structure (200) is made using an interlock type weave, and the yarn (F_{C2}) of layers of yarns underlying the first plurality of layers of yarns is weaved after yarn withdrawal part in surface discontinuity (220) using the satin type weave.

10. A method according to claim 9, **characterized in that** the yarns (F_{C1}) of the layer (C₁) of the first plurality of layers of yarns that are no longer woven from the surface discontinuity part (220) are interlaced with at least one yarn of a layer of the second plurality of layers of yarns (T₁-T₁₀) immediately prior to exiting the structure.

11. A method according to claim 9 or claim 10, **characterized in that** first and second outside faces (206a, 206b) extend in a longitudinal direction, and **in that** the yarn withdrawal parts (220, 210, 212) present in the first face (206a) are longitudinally offset relative to the yarn withdrawal parts (221, 211) present in the second face (206b).

12. A method according to any one of claims 9 to 11, **characterized in that** the portion of decreasing thickness (204) presents, in the direction of the yarns of the first plurality of layers of yarns (C₁-C₁₀), a decreasing number of layers of yarns of the second plurality of layers of yarns (T₁-T₁₀), and **in that** the fiber structure (200) includes yarn withdrawal parts in surface discontinuity (220, 221) that are distributed as a function of a determined decrease in the number of layers of yarns of the second plurality of layers of yarns.
